# EUROPEAN PATENT APPLICATION

(11) **EP 2 377 971 A1**
(43) Date of publication of application: **19.10.2011**
(21) Application number: 10160119.3
(22) Date of filing: 16.04.2010
(51) Int. Cl.: C25B 11/04, B01J 27/047

(54) **Amorphous transition metal sulphide films or solids as efficient electrocatalysts for hydrogen production from water or aqueous solutions**

(71) Applicant: EPFL Ecole Polytechnique Fédérale de Lausanne, 1015 Lausanne (CH)
(72) Inventor: Hu, Xile, 1003 Lausanne (CH); Merki, Daniel, 1010 Lausanne (CH); Vrubel, Heron, 1007 Lausanne (CH)
(74) Representative: Sacroug, Olivier

(57) **Abstract**

The present invention relates to metal electrocatalysts for hydrogen production from water or aqueous solutions and use thereof in electrodes and electrolysers.

## Description

### Field of the Invention

The present invention relates to metal electrocatalysts for hydrogen production from water or aqueous solutions and use thereof in electrodes and electrolysers.

### Background of the Invention

Hydrogen is proposed as the primary energy carrier for the future world. The benefits of hydrogen economy can be maximized if hydrogen is produced from an appropriate source. Currently the mass production of hydrogen is done by steam-reforming of methane and other fossil fuels. In the absence of carbon capture and sequestration, this technology gives only a marginal improvement in carbon emissions. The most desirable source of hydrogen is water, as it contains no carbon and is abundantly available. Water is also the end product for the recombination reaction of hydrogen and oxygen, during which the energy of these fuels is released. The production of hydrogen and oxygen from water, or the "water splitting", consists of two half cell reactions (Scheme 1).

H₂O → H₂ + 0.5 O₂ (1)

2H⁺ + 2e → H₂ (2)

OH- → 0.5 O₂ + H⁺ + 2e (3)

**Scheme 1.** Water splitting and its two half reactions.

In order to achieve high efficiency in water splitting, catalysts are needed for the reduction of proton to form H₂. Indeed the hydrogen evolution reaction (equation 2 in Scheme 1), that is, the reduction of proton to form H₂, is the key component for water electrolysis. It requires active catalysts. Pt and Pt metal composites catalyze hydrogen evolution efficiently at nearly zero overpotential (η) in acidic conditions (overpotential is the difference between the operating potential and the thermodynamic potential). However, the large scale application of Pt catalysts is limited by their high cost (Pt is sold for more than 1000 US Dollar per 28.3 g; for comparison, Ni is sold for 10 US dollars per 453 g), low abundance, and intolerance to impurities such as carbon monoxide. Ni based metal oxides and alloys work in alkaline conditions. Their use is limited by hash reaction conditions and the requirement for isolation to exclude CO₂. Extensive efforts have been devoted to the search of alternative catalysts containing only non-precious elements under both homogeneous and heterogeneous conditions.

Recently, MoS₂ nanoparticles have been identified as hydrogen evolution catalysts (Science, 2007, 317, 100; and Journal of the American Chemical Society, 2005, 127, 5308). Bulk MoS₂ is a poor catalyst, whereas nano-particules of MoS₂ and related metal sulfides, however, are more active. The best catalysts were crystallized, single-layered MoS₂ polygons deposited on Au(111), whith on-set η at 100-150 mV. Notwithstanding the impressive advances, the practical implementation of these systems is hindered by their sophisticated and/or energy intensive preparation procedures, such as ultra-high vacuum conditions, reduction by H₂S streams and annealing at elevated temperatures. Crystalline particules of WS₂ are also known as hydrogen evolution catalysts (J. Phys. Chem., 1988, 92,2311).

A method for obtaining electrochemical deposited amorphous MoS₂ thin films is disclosed in Thin Solid Films, 1996, 280, 86. However the disclosed amorphous MoS₂ thin films do not have specific applications and are simply used as intermediate products; the final product being obtained after annealing of amorphous MoS₂ thin films. The final product is used for solar cell and lubrication applications.

Thus there is still a need to find catalysts which can efficiently catalyze hydrogen production from water, which consist in non-precious metals, which can operate at low overpotential in water or aqueous solutions, under mild conditions, and with reasonable current densities and which can be simply and rapidly produced.

Surprisingly the Applicants were able to solve this problem in the present invention by providing an electrocatalyst having unique catalytic properties.

### Summary of the Invention

The present invention provides electrocatalyst for the reduction of proton to form H₂ consisting of amorphous transition metal sulphide films or solids having activity at all pH values. Preferably, the transition metal sulphide is MoS₂ or WS₂.

The invention further provides the electrocatalyst, wherein the amorphous transition metal sulphide films or solids are further doped with at least one metal selected from the group comprising Mn, Fe, Ni, Co, Cu, Zn, Sc, Ti, V, Cr, and Y.

The invention also relates to the use of amorphous transition metal sulphide films or solids as electrocatalyst for the reduction of proton to form H₂ at all pH values. Preferably the transition metal sulphide is MoS₂ or WS₂.

The invention further relates to the use of amorphous transition metal sulphide films or solids, wherein said amorphous transition metal sulphide films are further doped with at least one metal selected from the group comprising Mn, Fe, Ni, Co, Cu, Zn, Sc, Ti, V, Cr, and Y.

The invention also encompasses the use of the electrocatalyst of the invention for producing hydrogen gas from water or aqueous solutions.

The invention further encompasses electrode for use in production of hydrogen gas from water or aqueous solutions comprising the electrode substrate, wherein the electrocatalyst of the invention is deposited on said electrode substrate. Preferably the electrode substrate is any conducting or semi-conducting substrate, selected from the group comprising glassy carbon disc, reticulated vitreous carbon foam, FTO coated glass, indium tin oxide, carbon fiber, carbon nanotube, carbon clothes, graphene, Si, Cu2O, TiO2, titanium metal, and boron-doped diamond.

Additionally, the invention relates to electrolysers for the hydrolysis of water or aqueous solutions comprising the electrode of the invention.

### Brief description of figures

**Figure 1** shows Scanning electron micrographs of the MoS₂ (left) and Ni-MoS₂ (right) films.
**Figure 2** shows Polarization curves of MoS₂ and Ni-MoS₂ films on FTO recorded in a pH=2 solution of 0.1 M phosphate buffer; scan rate: 2 mV/s.
**Figure 3** shows Polarization curves of Ni-MoS₂ film on a rotating glassy carbon electrode recorded at pH = 0, 1, 2, 5, and 7. Scan rate: 2 mV/s; rotating rate: 4500 rpm.
**Figure 4** shows Polarization curves of Pt and Ni-MoS₂/glassy carbon rotating disk electrodes in a 1.0 M solution of H₂SO₄ under the influence of CO. A given volume of CO was injected into a sealed electrochemical cell (24 mL solution and 13 mL head space) before polarization curves were recorded. Scan rate: 2 mV/s; rotating rate: 4500 rpm.
**Figure 5** shows the Cell used for electrolysis experiments. (A) Insert on the Luggin capillary for the reference electrode, (B) 6mm diameter glassy carbon working electrode, (C) Platinum wire counter electrode, (D) Septum closed inlet, (E) PVC tubing connecting the cell to the pressure meter.
**Figure 6** shows Deposition of a MoS₂ film on a FTO (fluorinated tin oxide) coated glass by repeating cyclic voltammetry (25 cycles) with a solution of MoS₄²⁻ in water. The reduction and the oxidation peak both grow during the deposition.
**Figure 7** shows XPS spectra of MoS₂ (A and B) and Ni-MoS₂ (C, D, and E) films on FTO.
**Figure 8** shows UV-Vis spectra of MoS₂ films on FTO coated glass plates. The films were made either by applying a constant potential at the given potential, or by repeating cyclic voltammetry.
**Figure 9** shows Thickness of MoS₂ and Ni-MoS₂ films on FTO as a function of scanning cycles and concentration of precursors. The measurements for a given set of variables have been made multiple times. (A) Thickness of MoS₂ films as a function of scanning cycles;
the concentration of MoS₄²- is 2.0 mM. (B) Thickness of MoS₂ films as a function of MoS₄²⁻ concentrations; 25 scanning cycles were applied for each deposition. (C) Thickness of Ni-MoS₂ films as a function of scanning cycles; the concentration of Ni(MoS₄)₂²⁻ is 1.0 mM. (D) Thickness of Ni-MoS₂ films as a function of Ni(MoS₄)₂²⁻ concentrations; 15 scanning cycles were applied for each deposition.

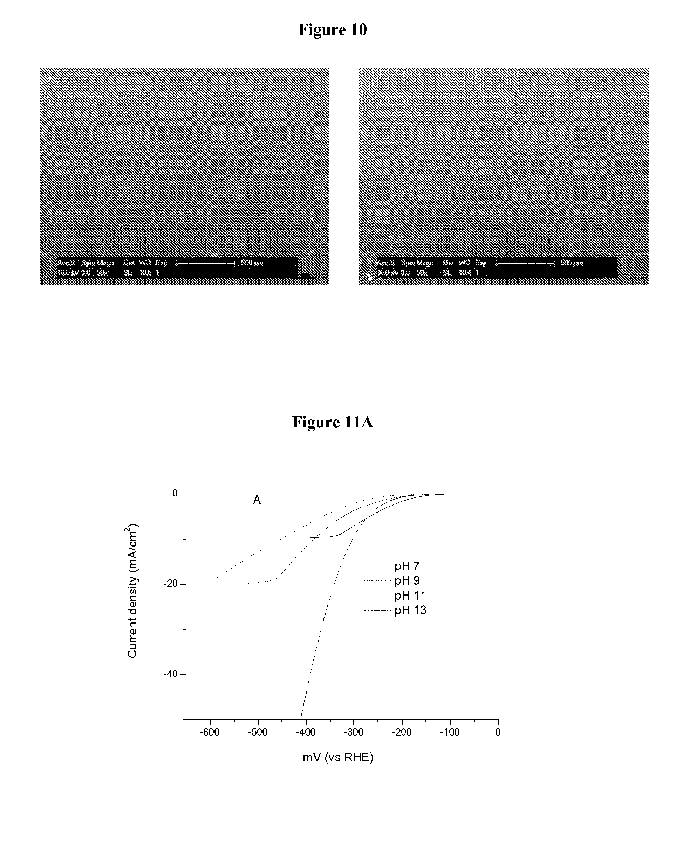

**Figure 10** shows Scanning electron micrographs of the MoS₂ (left) and Ni-MoS₂ (right) films over wide areas.

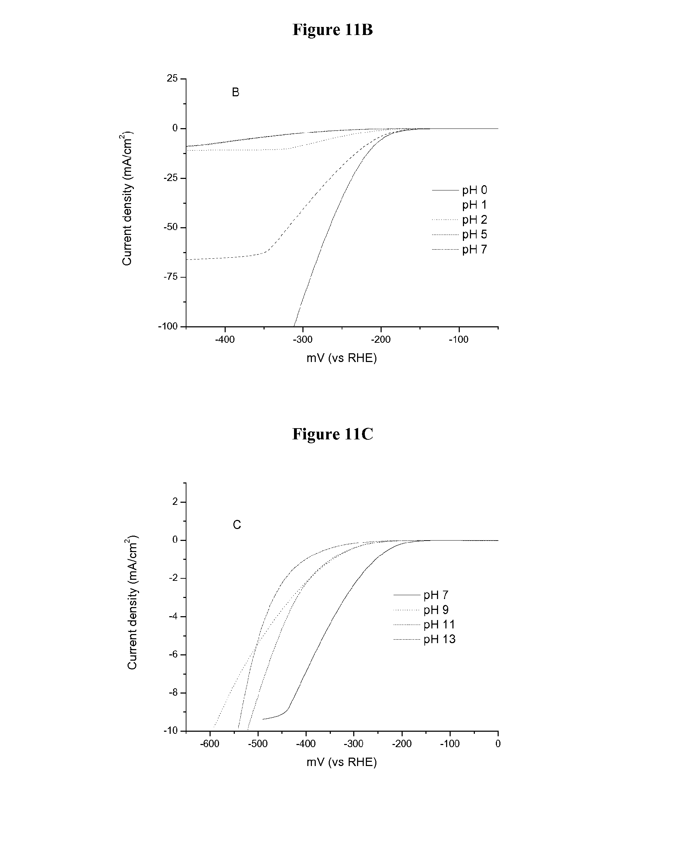

**Figure 11** shows (A) Polarization curves of Ni-Mo_{S}2 film on a rotating glassy carbon electrode recorded at pH = 7, 9, 11, and 13. Scan rate: 2 mV/s; rotating rate: 4500 rpm. (B) Polarization curves of MoS₂ film on a rotating glassy carbon electrode recorded at pH = 0, 1, 2, 5, and 7. Scan rate: 2 mV/s; rotating rate: 4500 rpm. (C) Polarization curves of MoS₂ film on a rotating glassy carbon electrode recorded at pH = 7, 9, 11, and 13. Scan rate: 2 mV/s; rotating rate: 4500 rpm.

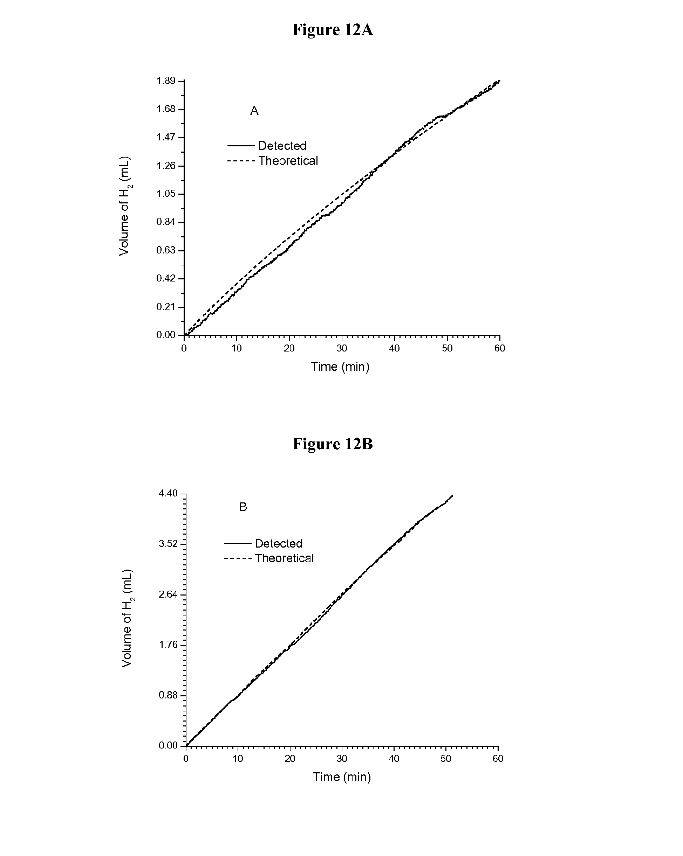

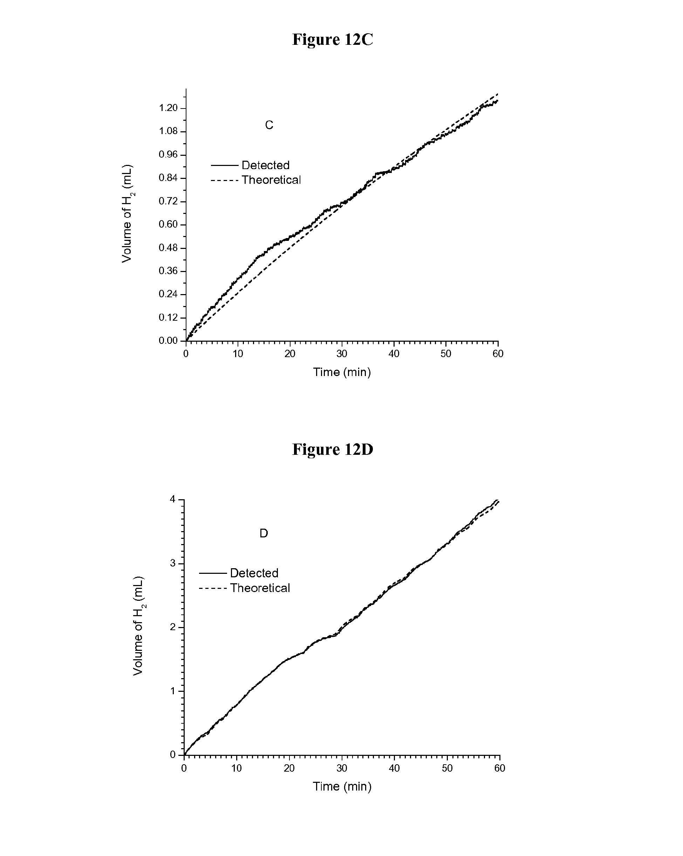

**Figure 12** shows Current efficiencies for H₂ production catalyzed by MoS₂ and Ni-MoS₂ films on glassy carbon. Theoretical lines were calculated assuming a 100% Faraday's yield for H₂ production. (A) MoS₂ catalyst at pH = 0 and 200 mV overpotential. (B) MoS₂ catalyst at pH = 0 and 300 mV overpotential. (C) Ni-MoS₂ catalyst at pH = 0 and 200 mV overpotential. (D) Ni-MoS₂ catalyst at pH = 0 and 300 mV overpotential.

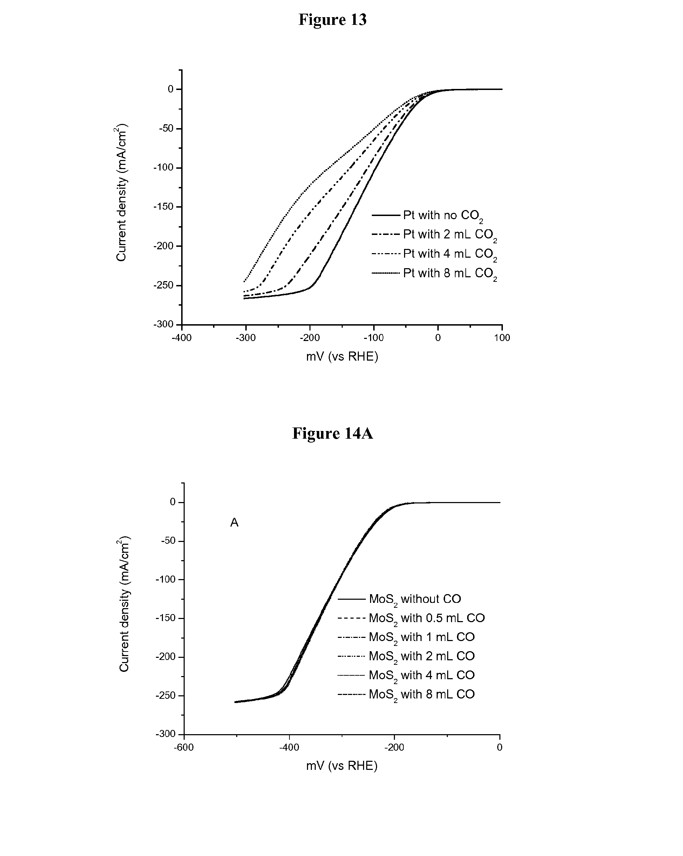

**Figure 13** shows Polarization curves of a rotating Pt disk electrode in a 1.0 M solution of H₂SO₄ under the influence of CO₂. A given volume of CO₂ was injected into a sealed electrochemical cell (24 mL solution and 13 mL head space) before polarization curves were recorded. The Pt electrode was activated freshly before each scan. Scan rate: 2 mV/s; rotating rate: 4500 rpm.

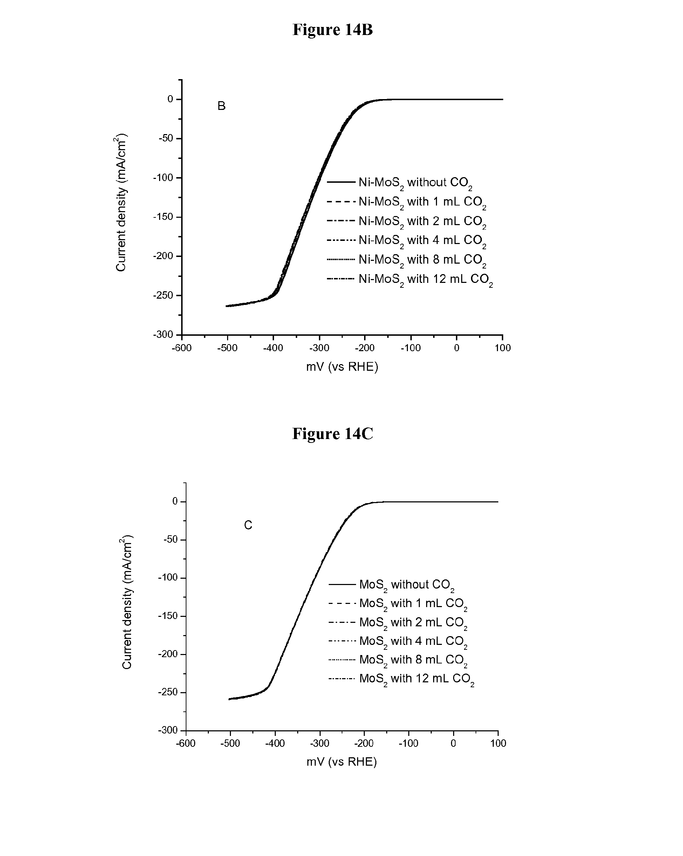

**Figure 14** shows (A) Polarization curves of a MoS₂-modified rotating glassy carbon electrode recorded in a 1.0 M solution of H₂SO₄ under the influence of CO. A given volume of CO was injected into a sealed electrochemical cell (24 mL solution and 13 mL head space) before polarization curves were recorded. Scan rate: 2 mV/s; rotating rate:
   4500 rpm. (B) Polarization curves of a Ni-MoS₂-modified rotating glassy carbon electrode recorded in a 1.0 M solution of H₂SO₄ under the influence of CO₂. A given volume of CO₂ was injected into a sealed electrochemical cell (24 mL solution and 13 mL head space) before polarization curves were recorded. Scan rate: 2 mV/s; rotating rate: 4500 rpm. (C) Polarization curves of a MoS₂-modified rotating glassy carbon electrode recorded in a 1.0 M solution of H₂SO₄ under the influence of CO₂. A given volume of CO₂ was injected into a sealed electrochemical cell (24 mL solution and 13 mL head space) before polarization curves were recorded. Scan rate: 2 mV/s; rotating rate: 4500 rpm.

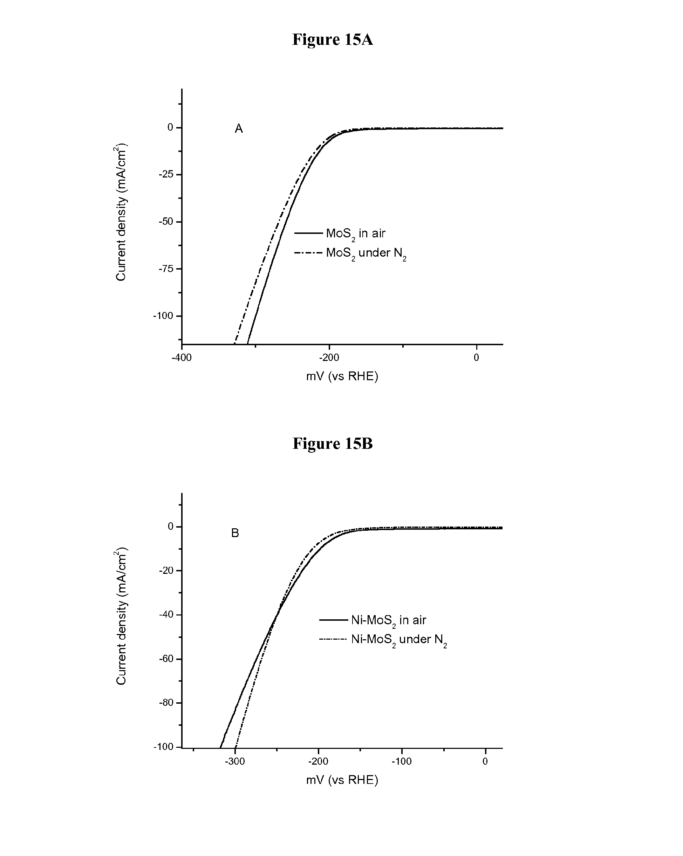

**Figure 15** shows (A) Polarization curves of a MoS₂-modified rotating glassy carbon electrode recorded in a 1.0 M solution of H₂SO₄ in air and under N₂. Scan rate: 2 mV/s; rotating rate: 4500 rpm. (B) Polarization curves of a Ni-MoS₂-modified rotating glassy carbon electrode recorded in a 1.0 M solution of H₂SO₄ in air and under N₂. Scan rate: 2 mV/s; rotating rate: 4500 rpm.

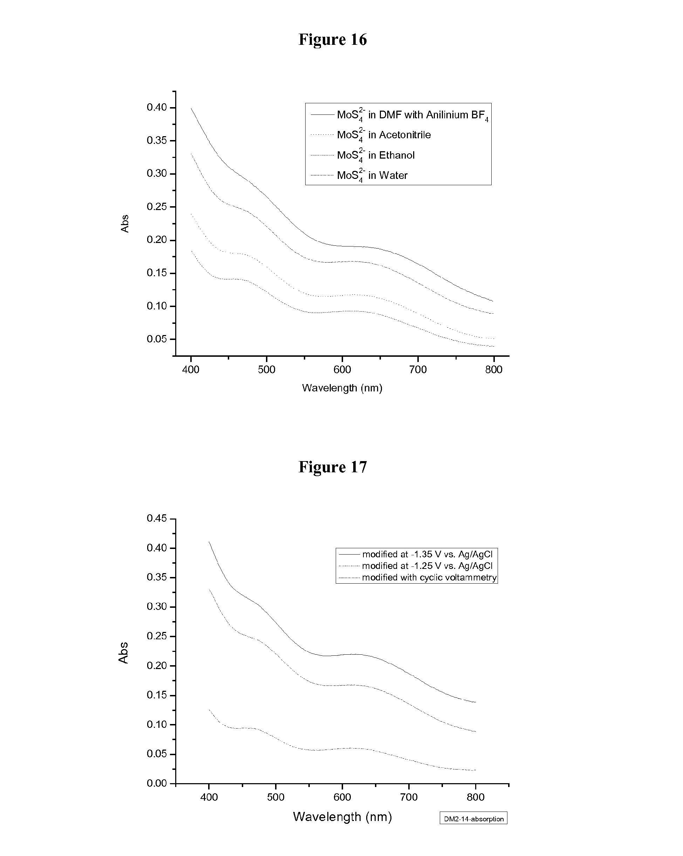

**Figure 16** shows shows UV/VIS spectra of FTO coated glass plates, modified in different solvents. The modification was made by repeating cyclic voltammetry with solutions of MoS₄²⁻.
**Figure 17** shows UV/VIS spectra of FTO coated glass plates, modified either by applying a constant potential or by repeating cyclic voltammetry.

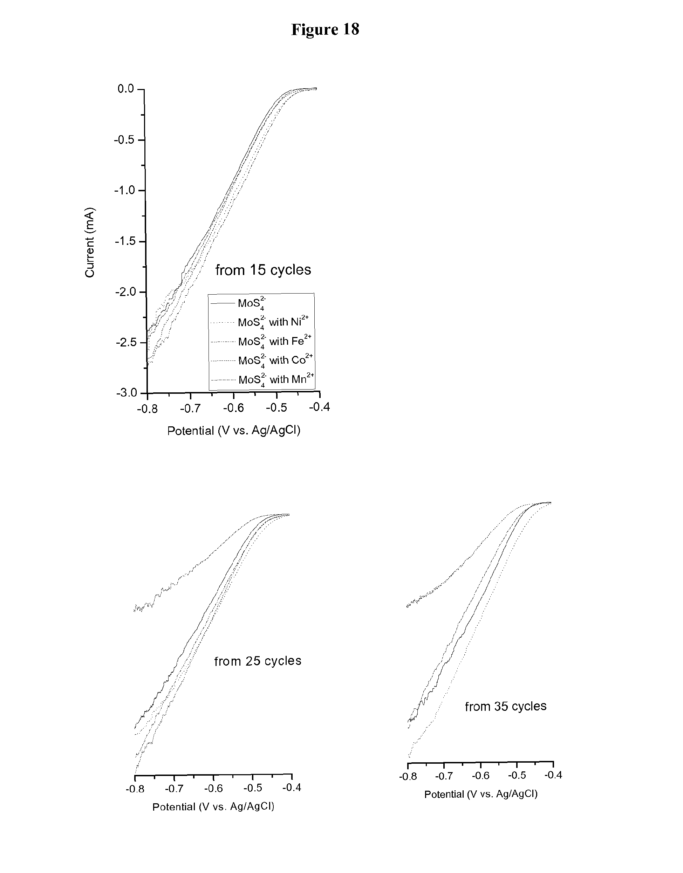

**Figure 18** shows polarization curves of deposited films containing different transition metal ions at pH 2 with 2 mV/s scan rate. The films were deposited on FTO coated glass by cyclic voltammetry with 15 (left), 25 (middle) and 35 cycles (right), respectively.

### Detailed description of the Invention

All publications, patent applications, patents, and other references mentioned herein are incorporated by reference in their entirety. The publications and applications discussed herein are provided solely for their disclosure prior to the filing date of the present application. Nothing herein is to be construed as an admission that the present invention is not entitled to antedate such publication by virtue of prior invention. In addition, the materials, methods, and examples are illustrative only and are not intended to be limiting.

In the case of conflict, the present specification, including definitions, will control. Unless defined otherwise, all technical and scientific terms used herein have the same meaning as is commonly understood by one of skill in art to which the subject matter herein belongs. As used herein, the following definitions are supplied in order to facilitate the understanding of the present invention.

The term "comprise" is generally used in the sense of include, that is to say permitting the presence of one or more features or components.

As used in the specification and claims, the singular form "a", "an" and "the" include plural references unless the context clearly dictates otherwise.

As used herein, an electrocatalyst is a catalyst participating in electrochemical reactions and usually functioning at electrode surfaces or may be the electrode surface itself. The electrocatalyst assists in transferring electrons between the electrode and reactants, and/or facilitates an intermediate chemical transformation described by half-reactions. Like other catalysts, an electrocatalyst lowers the activation energy for a reaction without altering the reaction equilibrium. Electrocatalysts go a step further then other catalysts by lowering the excess energy consumed by a redox reaction's activation barriers.

As used herein, the term "amorphous" relates to noncrystalline, having no molecular lattice structure that is characteristic of solid state.

As used herein, water splitting is the general term for a chemical reaction in which water (H₂O) is separated into oxygen (O₂) and hydrogen (H₂).

As herein used, the working electrode, is the electrode in an electrochemical system on which the reaction of interest is occurring, for example in the present invention the reaction of reduction of proton to form H₂. The working electrode is often used in conjunction with an auxiliary electrode, and a reference electrode in a three electrode system. Common working electrodes can consist of inert metals such as gold, silver or platinum, to inert carbon such as glassy carbon or pyrolytic carbon, and mercury drop and film electrodes.

As herein used, the term "hydrogen evolution" is interchangeably used with the term "reduction of proton to form H₂".

Water electrolysis utilizes electricity as the energy input, which makes it especially important in the future economy. It is conceivable that renewable energies such as solar, nuclear, wind, hydropower, geothermal, etc. would contribute more and more to the world's energy supplies. These energies are most often converted into electricity. Water electrolysis thus can also be regarded as an efficient method of energy storage.

Water electrolysis is the decomposition of water (H₂O) into oxygen (O₂) and hydrogen gas (H₂) due to an electric current being passed through the water. Usually an electrical power source is connected to two electrodes which are placed in the water. Normaly hydrogen will appear at the cathode (the negatively charged electrode) whereas oxygen will appear at the anode (the positively charged electrode). Electrolysis of pure water requires excess energy in the form of overpotential to overcome various activation barriers. Without the excess energy the electrolysis of pure water occurs very slowly if at all. Decomposition of pure water into hydrogen and oxygen at standard temperature and pressure is not thermodynamically favorable. The efficacy of electrolysis is increased through the addition of an electrolyte, such as a salt, an acid, or a base and the use of electrocatalysts. Usually on an industrial scale, hydrogen is produced by the electrolysis of water by applying high-pressure and high-temperature systems in order to improve the energy efficiency of electrolysis.

In the water at cathode, a reduction reaction takes place, with electrons (e⁻) from the cathode being given to hydrogen cations to form hydrogen gas: 2 *H⁺(aq)* + 2e⁻ → H₂(g).
In order to achieve high efficiency in water electrolysis, electrocatalysts are needed for the reduction of proton to form H₂.

In the first embodiment, the present invention relates to electrocatalyst for the reduction of proton to form H₂ consisting of amorphous transition metal sulphide films or solids having activity at all pH values. Preferably the transition metal sulphide is MoS₂ or WS₂.

In a further embodiment, the present invention provides the electrocatalyst of the invention, wherein amorphous transition metal sulfide films or solids are further doped with metal elements, preferably with at least one metal selected from the group comprising Mn, Fe, Ni, Co, Cu, Zn, Sc, Ti, V, Cr and Y, which have been prepared by electrochemical methods. The most preferably amorphous transition metal sulfide films or solids are further doped with at least one metal selected from the group comprising Ni, Fe, Co and Mn. Other elements such as Li, Na, K, Al, Si, O, H, C, N can be present as impurities, which may not affect the performance of the electrocatalyst of the invention.

For example, doped MoS₂ have a general formula Mₓ(MoS₂), where x = 0 to 1. Furthermore, the Mo to S ratio could be from 1.5 to 3 to account for stoichiometry due to the presence of other elements and components, for example, the presence of MS.

The Applicants have surprisingly found that for example amorphous MoS₂ films and amorphous Ni-doped MoS₂ films are robust and active hydrogen evolution catalysts. The catalysts are prepared at room temperature and one atmosphere, and in a simple, rapid, and scalable manner. The catalysts work in water or aqueous solutions, at all pH values (i.e. 1 to 14), do not require the activation and have overpotentials as low as ca. 50 mV. The catalytic activity is not inhibited by CO, CO₂, or air.

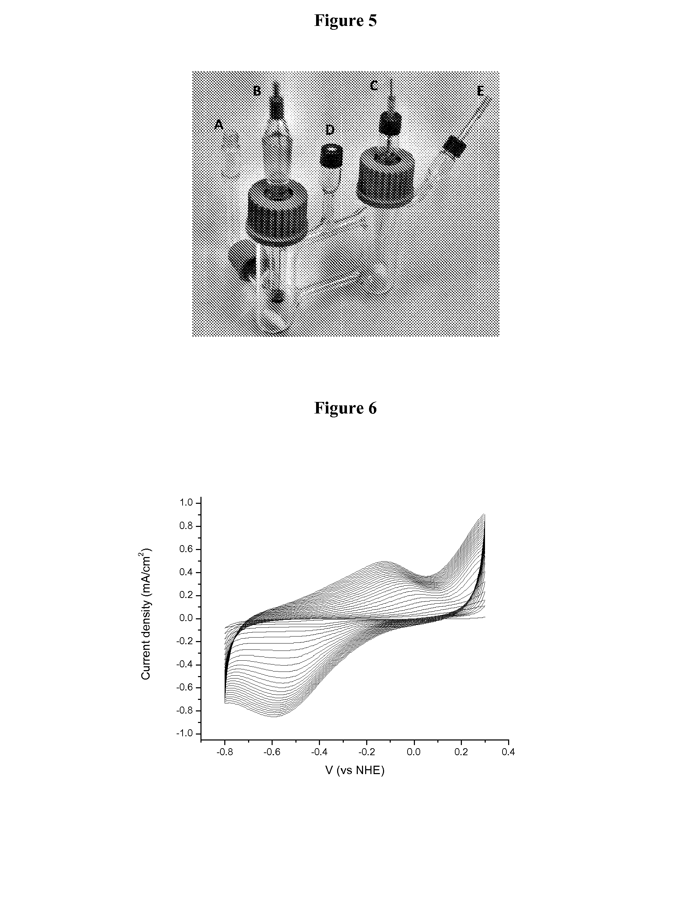

When studying the electrochemistry of [MoS₄]²⁻ and [Ni(MoS₄)₂]²⁻, the Applicants noticed that uniform films could be deposited onto the working electrodes by potential cycling experiments or cathodic electrolysis in solutions containing these compounds. The deposition worked on different conducting substrates such as fluorine-doped tin oxide (FTO) and glassy carbon. The deposition of films from aqueous solution of [MoS₄]²⁻ on FTO is used herein as an example. When the potential was cycled continuously from 0.3 V to -0.8 V vs. NHE (NHE = normal hydrogen electrode) at a rate of 50 mV/s in a 2.0 mM aqueous solution of (NH₄)_{2[}MoS₄], one oxidation and one reduction peak grew in at -0.1 V and -0.6 V, respectively, concomitant with film formation (Fig. 6). After 5 scans, the film was visible; after 25 scans, the heights of the two redox peaks approached saturation. Samples prepared with various number of scan cycles were collected for electrochemical measurements.

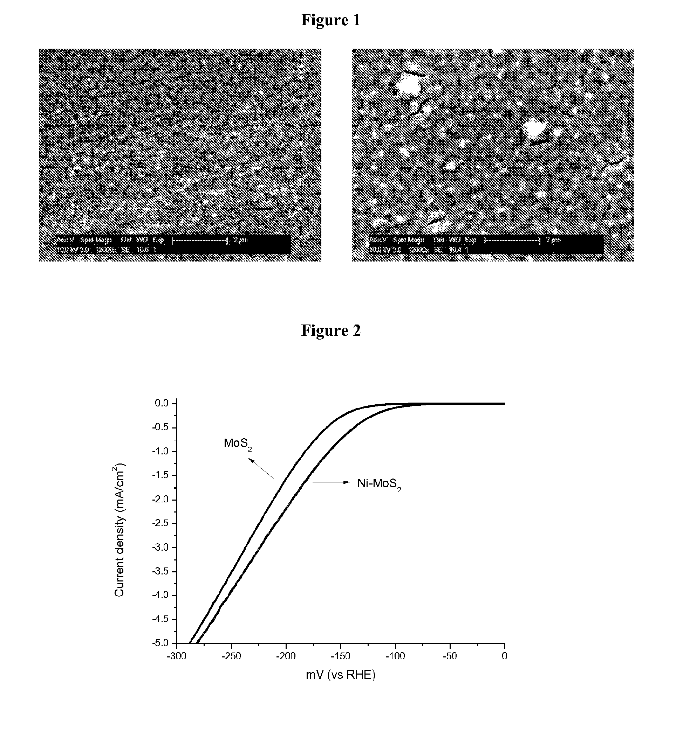

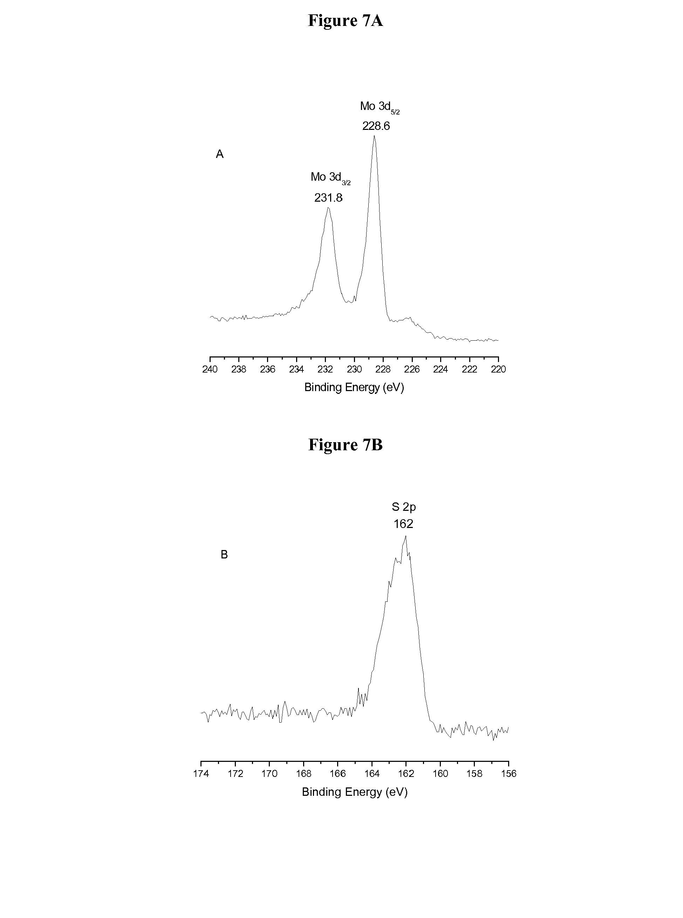

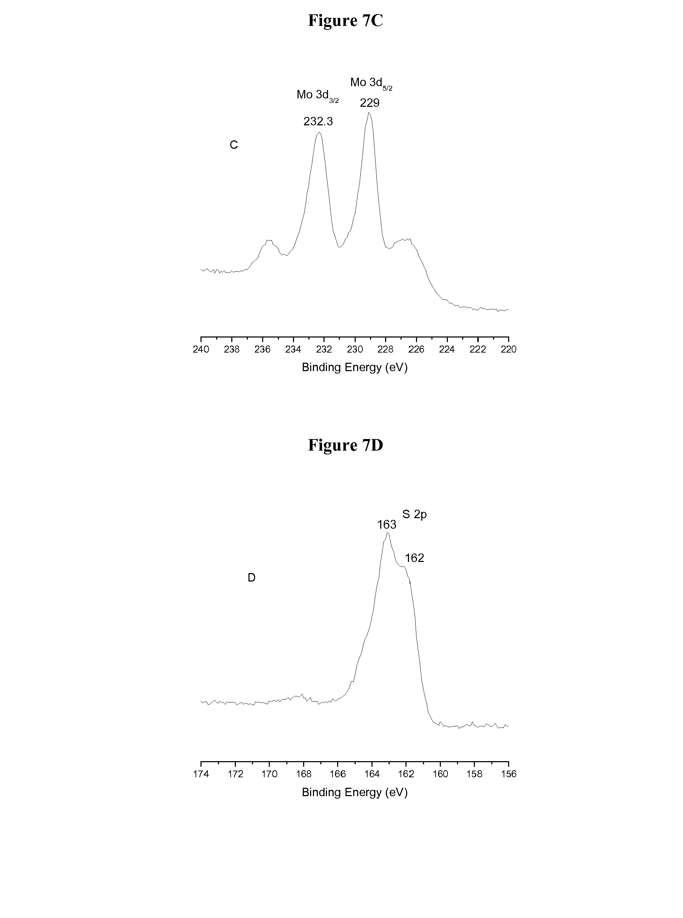

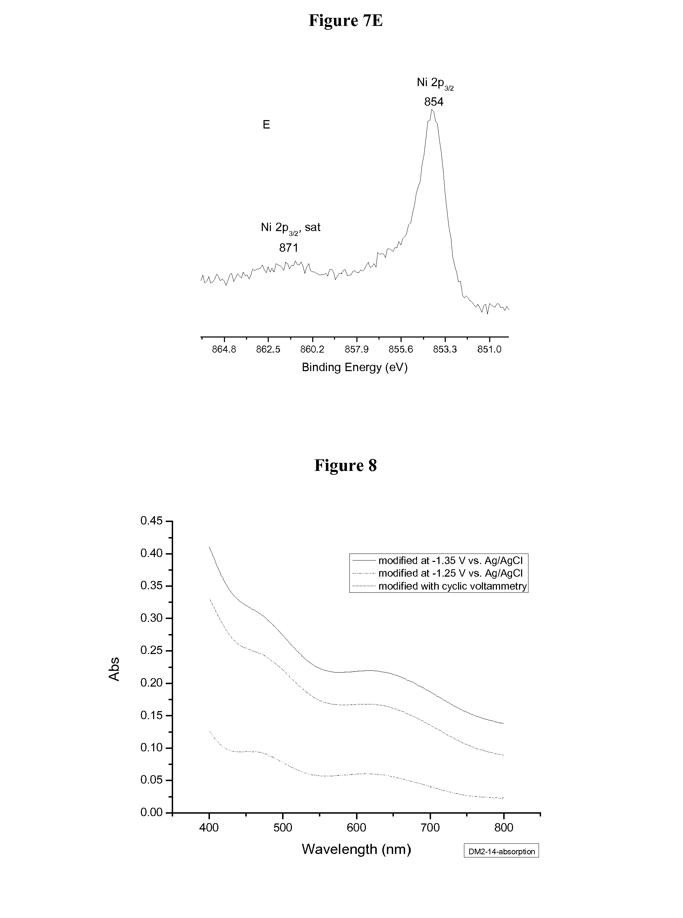

The chemical composition of the metal sulfide films were probed by X-ray photoelectron spectroscopy (XPS). The films made from (NH₄)₂[MoS₄] were identified as mainly MoS₂ (Fig. 7). According to optical spectroscopy (Fig. 8), these MoS₂ films on FTO are similar to those prepared earlier by cathodic deposition. No electrocatalytic study was reported with the latter films. The films made from [Ni(MoS₄)₂]²- contain mainly MoS₂, and ca. 20% ofNi (relative to Mo) that exists probably as Ni²⁺ (Fig. 7). All films are amorphous, as indicated by powder X-ray diffraction (XRD). Figures 1 and 10 show the scanning electron microscopic images of the MoS₂ and Ni-MoS₂ films. The MoS₂ films are clearly amorphous and thus distinct from MoS₂ single crystals or nanoparticles. The Ni- MoS₂ films display similar morphologies to the MoS₂ films.

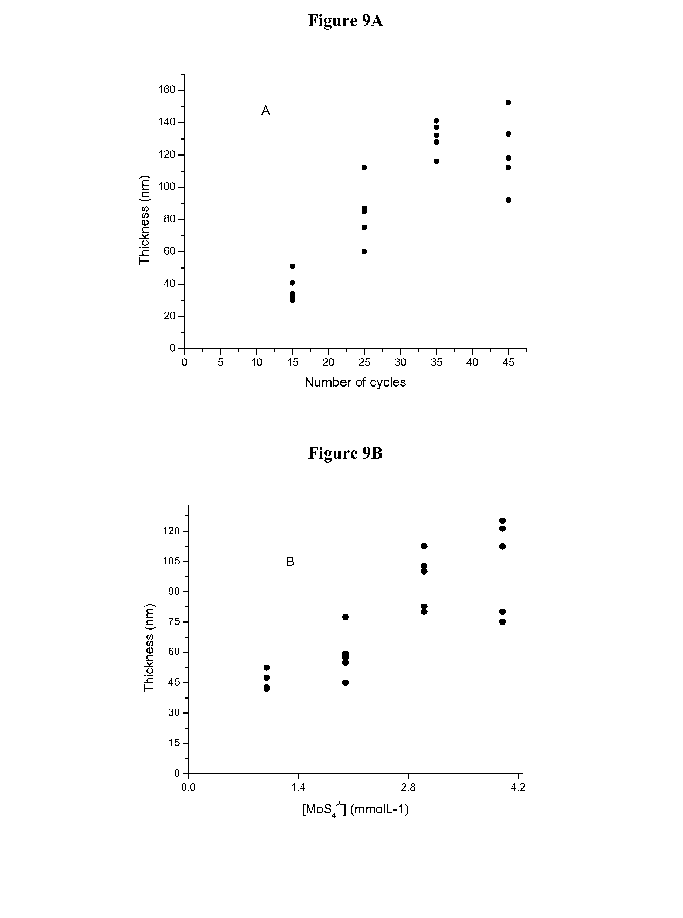

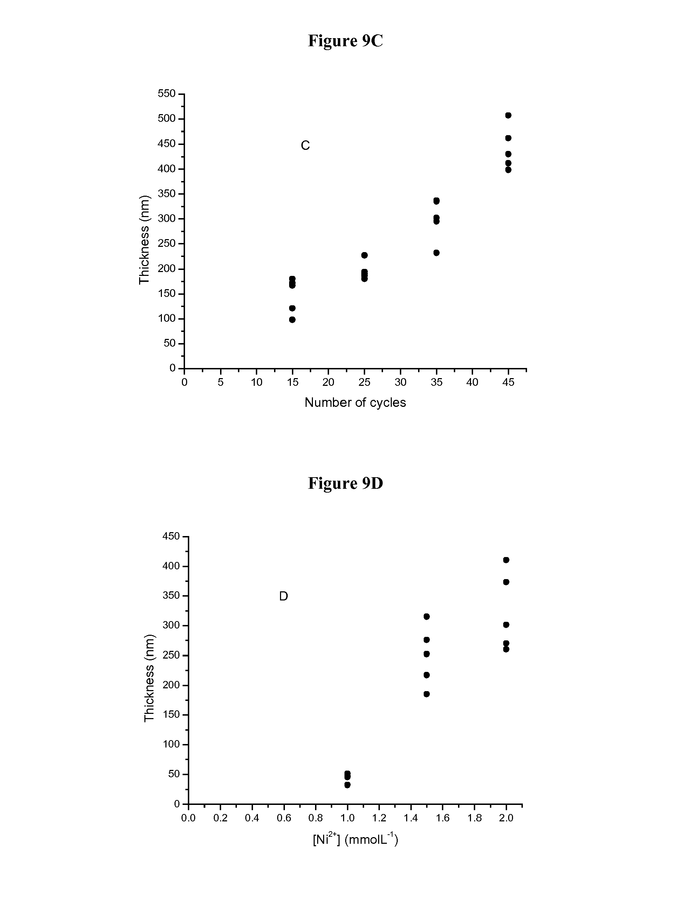

The thickness of the films was determined by a profiler. It is possible to control the film thickness by varying the concentration of the solutes and the number of scan cycles (Fig. 9). Amorphous films are solid layers of a few nm to some tens of µm thickness deposited on a substrate. Preferably most films have a thickness between 40 nm and 150 nm for MoS₂ and between 60 nm and 400 nm for Ni-MoS₂ films.

The films can be deposited on any conducting or semi-conducting substrate, comprising, but not limited to, glassy carbon disc, reticulated vitreous carbon foam, FTO coated glass, indium tin oxide, carbon fiber, carbon nanotube, carbon clothes, graphene, Si, Cu₂O, TiO₂, titanium metal, boron-doped diamond, and differents metals. Preferably FTO coated glass is used, because one can modify numerous electrodes and store them. Also the analysis of the film on FTO coated glass is much easier than on glassy carbon or reticulated vitreous carbon, e.g. the analysis by scanning electron microscopy or UV/VIS spectroscopy.

Besides films, the amorphous transition metal sulphide can be in the form of solids. For example, amorphous MoS₂ solids can be made by by a modification of the method already described by Poulomi Roy, Suneel Kumar Srivastava in Thin Solid Films, 496 (2006) 293-298. The solids can be put onto a substrate such as FTO and show catalytic activity for hydrogen evolution reaction.

Excellent activity is observed at all pH values. The overpotential is between 70 to 150 mV. At 200 mV overpotential, the current density of a flat rotating-disk glassy carbon electrode is higher than 10 mA/cm². Considering limiting factors such as electrode resistance and substrate diffusion, the intrinsic catalytic activity should be much higher.

For example the present invention provides the amorphous MoS₂ and Ni-doped MoS₂ films, which are robust and active hydrogen evolution catalysts with overpotentials as low as ca. 50 mV in water. Significant current densities could be obtained at low overpotentials. The catalysis works at all pH values (i.e. 0 to 14). The current efficiencies for H₂ production are quantitative. The catalysts are not poisoned by CO and CO₂.

The catalytic activity of these metal sulfide films was studied by electrochemistry. Figure 2 shows the polarization curves of MoS₂ and Ni-MoS₂ on FTO at pH = 2.0. Hydrogen evolution occurs at very low overpotentials, i.e., ca. 100 mV for MoS₂ and 50 mV for Ni-MoS₂. The amorphous MoS₂ appears to be more active as the MoS₂ single crystals deposited on Au(111). The apparent current density (*J*) for the MoS₂ film at η = 150 mV and pH = 2 is ca. 0.4 mA/cm², higher than that for the MoS₂ crystals at the same overpotential at pH = 0.2 (*J* ≈ 0.2 mA/cm2). The Ni-MoS₂ film is even more active than the MoS₂ film. The on-set η is 50 mV lower, and the current density at η = 150 mV and pH =2 is ca. 1 mA/cm², about 2.5 times higher. The catalysis is fast enough that the catalytic currents are diffusion-dependent even at relatively low overpotentials.

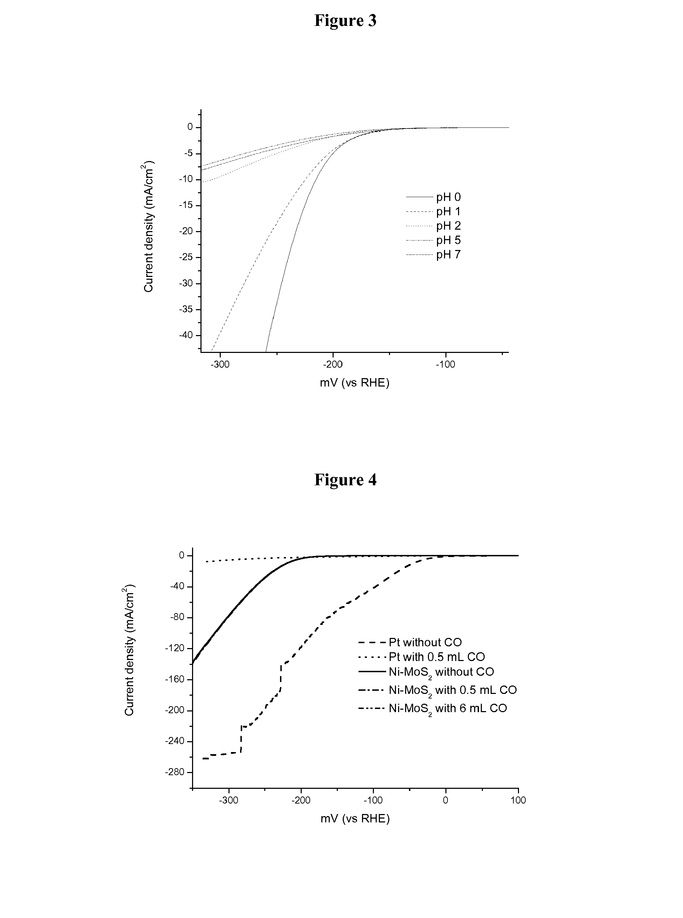

The same metal sulfide films were deposited onto a rotating glassy carbon disk electrode. The films display high catalytic activity for hydrogen evolution at a wide range of pH values. Figure 3 shows the polarization curves of the Ni-doped MoS₂ film recorded at pH 0 to 7 with a rotating rate of 4500 rpm. The data recorded at pH = 9, 11, 13, and those of the MoS₂ film are shown in Figure 11. In all acidic and neutral aqueous solutions, hydrogen evolution occurs at η ≈ 100 mV. As expected, the apparent current densities decrease with an increase of pH values. At low overpotentials (η < 250 mV), the current is independent of rotating rates and therefore kinetic-controlled. Tafel analysis of the polarization curves could be made from *η* = 120 to 200 mV. For Ni-MoS₂ films, the exchange current densities at different pHs are in the order of 10⁻⁴ to 10⁻³ mA/cm². The Tafel slops change from 45 mV per decade at pH = 0 to 73 mV per decade at pH = 7 (see Table 1). This is an indication for the change of mechanism for the catalysis at different pH values. Similar trends were observed for MoS₂ films. The films also displayed activity in basic media, but with higher overpotentials and lower current densities. Again the Ni-doped MoS₂ film exhibits higher activity than the MoS₂ film.

**Table 1. Tafel data obtained from the polarization curves recoded for modified glassy carbon rotating disk electrodes. The scan rate is 2 mV/s. The analysis was done on data collected at 120 to 200 mV overpotential.**

| | MoS₂ | | Ni-doped MoS₂ | |
|---|---|---|---|---|
| | slope (mV per decade) | i₀ (mA/cm²) | slope (mV per decade) | i₀ (mA/cm²) |
| pH 0 | 36.6 | 2.16 · 10⁻⁵ | 44.8 | 1.73 · 10⁻⁴ |
| pH 1 | 36.8 | 1.80 · 10⁻⁵ | 48.8 | 3.68 · 10⁻⁴ |
| pH 2 | 37.5 | 5.21 · 10⁻⁶ | 57.4 | 6.17 · 10⁻⁴ |
| pH5 | 55.4 | 4.15 · 10⁻⁵ | 68.4 | 1.64 · 10⁻³ |
| pH 7 | 46.2 | 1.02 · 10⁻⁵ | 73.2 | 3.42 · 10⁻³ |

Bulk electrolysis was carried out to determine the current efficiency of the catalytic hydrogen evolution. In a 1 M solution of H₂SO₄, the Ni-doped MoS₂ film deposited on a glassy carbon disk gave current densities of 180 and 11 mA/cm² at η = 300 and 200 mV, respectively. Under similar conditions, the MoS₂ film gave current densities of 160 and 14 mA/cm². These current densities are among the highest reported for non-noble catalysts in acidic or neutral conditions. For comparison, a recently report Ni-bisphosphine/carbon nanotube based H₂ production catalyst gave a current density of 4 mA/cm² at η = 300 mV. The Faraday yields for H₂ production were found to be quantitative within experimental errors. By measuring pressure change during water splitting, it was possible to monitor H₂ production in-situ. Figure 12 shows that the current efficiency remains quantitative during an extended period of time.

One limitation of Pt-based hydrogen evolution catalysts is that they are easily poisoned by impurities such as carbon monoxide (CO). Figure 4 shows the polarization curves of a Pt-disk electrode at pH = 0. When a small amount of CO gas was introduced, the catalytic activity diminished dramatically. When CO₂ gas was introduced, the catalytic activity also diminished but to a lesser degree (Figure 13). The latter is probably due to the reduction of CO₂ in water by Pt to form CO, which then poisons Pt. On the contrary, the catalytic activity of both Ni-doped MoS₂ and MoS₂ films are not affected by CO or CO₂, as shown in Figure 4 and Figure 14. The stability of these synthetic catalysts against impurity gases offers an important advantage in practical uses.

The catalytic properties of Ni-doped MoS₂ and MoS₂ films were further investigated under air. Nearly identical polarization curves were obtained in N₂-purged and aerobic aqueous solutions at pH = 0 (Figure 15). Therefore the metal sulfide catalysts are not inhibited by air. This is a highly desirable feature as electrolysis can be carried out under aerobic conditions. On the contrary, most synthetic catalysts based on organometallic and coordination compounds are unstable in air under electrolysis conditions. They only work in degassed solutions and under an inert atmosphere.

As mentioned above, other transition metal ions than nickel were used as dopping metal elements. The preparation of the complexes *in situ* is an easy and quick way to try different transition metal ions as central ions. In one example, this method was used to deposit films containing Co²⁺, Fe²⁺ and Mn²⁺, respectively. With each transition metal ion, three FTO coated glass plates were modified by repeating cyclic voltammetry, performing 15, 25 and 35 cycles, respectively.

Polarization curves were measured with all other samples to compare their catalytic activity with the one of the Ni-doped MoS₂ containing film. Figure 18 shows the polarization curves with the films deposited during 15 cycles (left), 25 cycles (middle) and 35 cycles (right). The difference in catalytic activity seems to be low in case of thin films and increases when films get thicker. The polarization curve of the third manganese sample is not shown due to an irregularity during the measurement, but it seemed to be worse than the iron sample (blue). The nickel containing film shows the lowest overpotential and the highest current density in any case. With the same method, FTO coated glass plates were modified by using tetrathiotungstate instead of tetrathiomolybdate. The catalytic activity of these tungsten containing films was lower than the one of the molybdenum analogs.

In the further embodiment, the present invention provides simple, rapid, and highly manufacturable procedure for the deposition of transition metal sulfide films or solids on various conducting substrates, including electrode substrate. The synthetic procedures are simple, versatile, and are amenable to large-scale manufacture. The deposition can be done by using the electrochemical deposition (electroplating) or chemical depositon.

For example, the electrochemical deposition is a process of coating an object, usuall metallic, with one or more relatively thin, tightly adherent layers (films) of some other metal by means of electrochemical process, which involves electrical and chemical energy. During this process, the object to be plated is immersed in a solution containing dissolved salts of the metal to be deposited. The set up is made up of a cathode and an anode with the object to be plated usually the cathode connected to the negative terminal of a direct current source. To complete the electrical circuit, another metal is connected to the positive terminal and both are immersed in the solution. When current applied, the electrical energy carried is converted to chemical energy by decomposition, a reaction in which the elements are divided into positive and negative charged ions. The movement of positively charged ions towards the cathode surface (substrate) results to metal deposition.

The Applicants found that electrodeposition takes place by reversible potential cycling of the solution containing the catalyst precursor. This electrodeposition method has some advantages. For example, it is possible to monitor the formation of the films when they are made, and thus control the thickness of the films according to the scanning cycles. Furthermore, the depositin can occur at a potential window where no other reactions such as hydrogen evolution occur. While catalyst can also be deposited by cathodic electrolysis at a rather negative potential with the same precursors, hydrogen evolution occurs together with electrodeposition. The deposition by potential cycling is therefore more efficient.

In a further embodiment, the present invention relates to the use of amorphous transition metal sulphide films or solids as an electrocatalyst for the reduction of proton to form H₂ at all pH values. Preferbly, the transition metal sulphide is MoS₂ or WS₂.

Also according to the present invention, the amorphous transition metal sulphide films or solids are further doped with at least one metal selected from the group comprising Mn, Fe, Ni, Co, Cu, Zn, Sc, Ti, V, Cr, and Y. Preferbly, the transition metal sulphide is MoS₂ or WS₂ and preferably the dopping metal is Ni, Fe, Mn and Co.

In another embodiment, the present invention relates to the use of the electrocatalyst of the invention for producing hydrogen gas from water or aqueous solutions. As used herein, "aqueous solution" relates to a solution in which water is solvent. The aqueous solution can contain various electrolytes and other compounds which are dissolved in water.

In still another embodiment, the present invention provides electrode for use in production of hydrogen gas from water or aqueous solutions comprising the electrode, wherein the electrocatalyst of the invention is desposited on said electrode substrate. The electrode (cathode) of the invention can be used used for hydrogen evolution at mild conditions (acidic and weakly basic conditions).

In still further embodiment, the present invention provides electrolysers for the hydrolysis of water comprising the electrode of the invention. The water electrolyser is the exact reverse of a hydrogen fuel cell; it produces gaseous hydrogen and oxygen from water. Electrolyser technology may be implemented at a variety of scales wherever there is an electricity supply to provide hydrogen and/or oxygen for virtually any requirement. It may be located conveniently close to the points of demand (to minimise gas infrastructure costs) or at large sites feeding into gas distribution infrastructures involving ships, tankers and/or pipelines.

Electrolysers are usually of high conversion efficiency, with the best commercially available examples approaching 90% efficiency. Accordingly the carbon-footprint of the generated H₂ and O₂ is principally a function of the input electricity. There are three principal types of water electrolyser: *alkaline* (referring to the nature of its liquid electrolyte), *proton-exchange membrane* (PEM, referring to its solid polymeric electrolyte), and *solid-oxide* (referring to its solid ceramic electrolyte). The alkaline and PEM electrolysers are well proven devices, while the solid-oxide electrolyser is as yet unproven. The PEM electrolyser is particularly well suited to highly distributed applications. The alkaline electrolyser currently dominates global production of electrolytic hydrogen.

The present invention also encompasses an electrical generator comprising:
- a fuel source, such as an electrolyser, which comprises the electrocatalysts of the invention for producing hydrogen gas from water or aqueous solution,
- a fuel line, such as a tube adapted to deliver hydrogen gas from the fuel source to a hydrogen fuel cell,
- a hydrogen fuel cell, which converts hydrogen gas produced by a fuel source into an electrical current and water (a hydrogen fuel cell generates electricity inside a cell through reactions between hydrogen (a fuel) and an oxidant (oxygen from the air), triggered in the presence of an electrolyte),
and wherein said electrical generator provides electricity for virtually any requirement, such as for example electrical engines or motors.

The electrodes of the present invention can be employed in many other applications which use cathodes. Such applications can be, but not limited to, the use as cathode material for waste-water treatments (see for example Environ. Sci. Technol., 2008, 42, pp. 3059-3063) and bio-electrolysis (see for example Environ. Sci. Technol., 2008, 42, pp. 8630-8640).

Another application of the invention can be in solar fuel conversion technologies, wherein the light is converted by a light-harvesting device into charges which provide electrons to the electrocatalysts of the invention for making hydrogen.

Further, the electrocatalysts of the invention can be subjected to post-treatments such as annealing treatments at different temperatures. These treatments might modify the microstructure of the catalysts and thus modify the catalytic performance. Annealing can lead to higher catalyst activity, better selectivities, or both of these enhancements. Effective conditions for annealing can include temperatures such as about 200 - 1000°C, preferably 500 - 900°C. The present invention is not limited to any particular range of annealing temperatures. It will be appreciated by a skilled person in the art that lower temperatures can be employed but will generally necessitate longer annealing times, because annealing is generally favored at higher temperatures.

Those skilled in the art will appreciate that the invention described herein is susceptible to variations and modifications other than those specifically described. It is to be understood that the invention includes all such variations and modifications without departing from the spirit or essential characteristics thereof. The invention also includes all of the steps, features, compositions and compounds referred to or indicated in this specification, individually or collectively, and any and all combinations or any two or more of said steps or features. The present disclosure is therefore to be considered as in all aspects illustrated and not restrictive, the scope of the invention being indicated by the appended Claims, and all changes which come within the meaning and range of equivalency are intended to be embraced therein.

The foregoing description will be more fully understood with reference to the following Examples. Such Examples, are, however, exemplary of methods of practising the present invention and are not intended to limit the scope of the invention.

### Examples

### Chemicals and Reagents

All manipulations were carried out under an inert N₂(g) atmosphere using glovebox techniques unless otherwise mentioned. Unless noted, all other reagents were purchased from commercial sources and used without further purification.

### Physical methods

GC measurement was conducted on a Perkin-Elmer Clarus 400 GC with a FID detector a TCD detector and a 5Å molecular sieves packed column with Ar as a carrier gas. UV-Vis measurements were carried out using a Varian Cary 50 Bio Spectrophotometer controlled by Cary WinUV software. SEM secondary electron (SE) images were taken on a Philips (FEI) XLF-30 FEG scanning electron microscope. XRD measurements were carried out on a PANalytical X'Pert PRO diffractometer using Cu K_{□1} radiation (0.1540 nm). Electrochemical measurements were recorded by an IviumStat electrochemical analyzer or an EG&G Princeton Applied Research Potentiostat/Galvanostat model 273. A three-electrode configuration was used. For polarization and electrolysis measurements, a platinum wire was used as the auxiliary electrode and an Ag/AgCl (KCl saturated) electrode was used as the reference electrode. The reference electrode was placed in a position very close to the working electrode with the aid of a Luggin tube. For rotating disk measurements, an Autolab Rotating Disk Electrode assembly was used. Potentials were referenced to reversible hydrogen electrode (RHE) by adding a value of (0.197 + 0.059 pH) V. Film thickness was measured using an Alpha Step 500 (KLA-Tencor) stylus-based surface profiler. Pressure measurements during electrolysis were performed using a SensorTechnics BSDX0500D4R differential pressure transducer. Both current and pressure data were recorded simultaneously using an A/D Labjack U12 interface with a sampling interval of one point per second. X-ray photoelectron spectroscopy (XPS) data were collected by Axis Ultra (Kratos analytical, Manchester, UK) under ultra-high vacuum condition (<10⁻⁸ Torr), using a monochromatic Al K_{α} X-ray source (1486.6 eV), in the Surface Analysis Laboratory of CIME at EPFL. The source power was maintained at 150 W (10 mA, 15mV). Gold (Au 4*f*_{7/2}) and copper (Cu *2p*_{*3*/}*₂)* lines at 84.0 and 932.6 eV, respectively, were used for calibration, and the adventitious carbon 1s peak at 285 eV as an internal standard to compensate for any charging effects. Sputtering of the surface by an ion beam was used to remove pollution. For quantification, relative sensitivity factors from the supplier were used.

### Deposition of films

### I. On glassy carbon electrodes

3 mm diameter glassy carbon rotating disk working electrode from *Autolab* (6.1204.300 GC) and 3 mm diameter glassy carbon working electrode from *CH Instruments* (CHI 104) were used.
The electrodes were polished with two different Alpha alumina powder (1.0 and 0.3 micron from *CH Instruments*) suspended in distilled water on a Nylon polishing pad (*CH Instruments*) and with Gamma alumina powder (0.05 micron from *CH Instruments*) suspended in distilled water on a Microcloth polishing pad (*CH Instruments*). Before going to the next smaller powder size and at the end of polishing, the electrodes were thoroughly rinsed with distilled water.

**Deposition of MoS₂:** The modification was carried out in a glove box under nitrogen. The freshly polished electrode was immersed into a 2 mM solution of (NH₄)₂MoS₄ in 0.1 M NaClO₄ in water (8 ml). Both chemicals were used as received *(Aldrich).* Thirty consecutive cyclic voltammograms were carried out on an Ivium Stat potentiostat (*Ivium Technologies*) with a saturated silver/silver chloride reference electrode (separated by a porous vycor tip) and a titanium wire counter electrode. The cyclic voltammograms were performed between +0.1 and -1.0 V vs. Ag/AgCl (sat.) and a scan rate of 0.05 V/s was employed. Finally, the modified electrode was rinsed with distilled water.

**Deposition of Ni-MoS₂:** The modification was carried out in a glove box under nitrogen. A 2 mM solution of NiCl₂ · 6 H₂O in 0.1 M NaClO₄ (4 ml) was added dropwise and under stirring to a 4 mM solution of (NH₄)₂MoS₄ in 0.1 M NaClO₄ (4 ml). All chemicals were used as received *(Aldrich).* The freshly polished electrode was immersed into the resulting dark solution. Twenty-five consecutive cyclic voltammograms were carried out on an Ivium Stat potentiostat (*Ivium Technologies*) with a saturated silver/silver chloride reference electrode (separated by a porous vycor tip) and a titanium wire counter electrode. The cyclic voltammograms were performed between +0.1 and -1.0 V vs. Ag/AgCl (sat.) and a scan rate of 0.05 V/s was employed. Finally, the modified electrode was rinsed with distilled water.

### II. On FTO-coated glass plates

**On FTO-coated glass plates:** FTO-coated glass was cut down to rectangular plates of 9 x 25 mm. The plates were cleaned in a bath of 1 M KOH in ethanol and washed with ethanol, water and acetone. An adhesive tape with a hole of 5 mm diameter was attached on each plate in such a way that a circle of 5 mm diameter in the bottom part and a small strip at the top of the plate remained uncovered. The plate will be modified in the area of the circle only and the uncovered strip serves as electrical contact.

**Depositions of MoS₂:** The modification was carried out in a glove box under nitrogen. The freshly prepared FTO electrode was immersed into a 1 mM solution of (NH₄)₂MoS₄ in 0.1 M NaClO₄ in water (6 ml). Both chemicals were used as received *(Aldrich).* Fifteen, twenty-five or thirty-five consecutive cyclic voltammograms were carried out on an Ivium Stat potentiostat (*Ivium Technologies*) with a saturated silver/silver chloride reference electrode (separated by a porous vycor tip) and a platinum wire counter electrode. The cyclic voltammograms were performed between +0.1 and -1.0 V vs. Ag/AgCl (sat.) and a scan rate of 0.05 V/s was employed. Finally, the modified electrode was rinsed with distilled water.

**Deposition of Ni-MoS₂:** The modification was carried out in a glove box under nitrogen. A 2 mM solution of NiCl₂ · 6 H₂O in 0.1 M NaClO₄ (3 ml) was added dropwise and under stirring to a 4 mM solution of (NH₄)₂MoS₄ in 0.1 M NaClO₄ (3 ml). All chemicals were used as received *(Aldrich).* The freshly prepared FTO electrode was immersed into the resulting dark solution. Fifteen, twenty-five or thirty-five consecutive cyclic voltammograms were carried out on an Ivium Stat potentiostat (*Ivium Technologies*) with a saturated silver/silver chloride reference electrode (separated by a porous vycor tip) and a platinum wire counter electrode. The cyclic voltammograms were performed between +0.1 and -1.0 V vs. Ag/AgCl (sat.) and a scan rate of 0.05 V/s was employed. Finally, the modified electrode was rinsed with distilled water.

### Chemical Deposition of MoS₂

MoS₂ was also chemically deposited on FTO plates by a modification of the method already described [Poulomi Roy, Suneel Kumar Srivastava, Thin Solid Films, 496 (2006) 293-298]: The deposition was carried in a small Petri dish poured on top of a heating plate set to 85 °C. The FTO glass plate was poured in the bottom of the Petri dish with the conductive face up and then a mixture of 20 mL of a 4 mM aqueous solution of (NH₄)₂MoS₄ and 1 mL of hydrazine hydrate (64% N₂H₄ in water) was added. The Petri dish was covered with a watch glass and left to react for 1 hour. A thin black layer formed on top of the FTO plate. Preliminary measurements showed that the as deposited film is also active for hydrogen evolution reaction.

### Bulk Electrolysis

Electrolysis experiments were performed in an H shape cell (Fig. 5). The platinum counter electrode was separated from the solution through a porous glass frit (porosity 3) and this whole assembly inserted into one side of the H cell. The modified working electrode was inserted in the other side of the cell, together with a magnetic stirring bar and a Luggin capillary. Two small inlets were present in the cell allowing the connection to the pressure monitoring device and the other kept closed by a septum for sampling of the gas phase. The whole cell apparatus is gas-tight and the pressure increase is proportional to the gases generated (H₂ + O₂). Prior to each experiment, the assembled cell was calibrated by injecting known amounts of air into the closed system and recording the pressure change, after the calibration the cell was purged with nitrogen for 20 minutes and the measurements were performed. Control experiments were performed using platinum as a working electrode and a quantitative Faraday yield was obtained by measuring the pressure (97-102 %) and confirmed by GC analysis of the gas in the headspace (92-96 %) at the end of the electrolysis. For the electrochemical modified electrodes the films were deposited on glassy carbon electrodes and electrolysis carried out during 60 minutes. At the end the current efficiency was determined by the pressure change in the system and confirmed by GC analysis.

### Solvents

At the beginning, only DMF was used as solvent for the modification of working electrodes. The presence of an acid was necessary and pyridinium or anilinium tetrafluoroborate was typically used therefore. The deposition in acetonitrile, ethanol and water worked also well. Unexpectedly, no acid needed to be present for the deposition in these three solvents. This result can be understood in case of ethanol and water, because they both are protic solvents and can serve as proton sources. Since the use of water as solvent is more interesting and easier, the behaviour in acetonitrile was not further investigated. Figure 16 shows the UV/VIS spectra of FTO (fluorinated tin oxide) coated glass plates which were modified in different solvents. According to these spectra all the deposited films are equal in their composition and they only vary in thickness.

### Starting Materials

For the modification of working electrodes a solution of compound (Pr₄N)₂[Ni(MoS₄)₂] **(1)** was normally used. It was assumed that this compound gets reduced at the working electrode and is deposited in a reduced form on the electrode surface. To check whether the initial complex is split in parts or stays together during its reduction, the modification was performed with a solution of (NH₄)₂MoS₄ **(2)** only, one of the reactant in the synthesis of compound **(1)**. The resulting film looked very similar to the previous deposited films, although its colour was less intense for the same number of cyclic voltammograms performed during the modification. Instead of using the isolated complex as starting material, the complex was synthesized *in situ* and the reaction mixture was directly used for the deposition. The newly obtained films seemed to be the same as the films obtained by using a solution of the isolated complex. This method was preferred henceforth. It gave us the possibility of using other transition metal ions than Ni²⁺, the second reactant in the synthesis of compound (1), without being concerned about isolating a pure compound.

### Electrode Materials

The film has been deposited on four different supporter materials glassy carbon disc, reticulated vitreous carbon foam, FTO coated glass and ITO (indium tin oxide) coated glass.

### Deposition at a Constant Potential

According to the present invention, the general procedure of the method of deposition was repeating cyclic voltammetry between +0.1 and -1.0 V vs. Ag/AgCl. Ponomarev et al. reported the deposition of MoS₂ films by the reduction of tetrathiomolybdate at a constant potential (Thin solid films, 1996, 280, 86). The electrodeposition started at -0.86 V and reached a maximum efficiency between -1.16 and -1.36 V vs. Ag/AgCl. The Applicants deposited a film on FTO coated glass using this method, applying a potential of -1.25 V or -1.35 V vs. Ag/AgCl, respectively. Figure 17 shows the UV/VIS spectra of the two samples as well as of one sample prepared by repeating cyclic voltammetry. One can see that the films deposited with these two different methods show the same UV/VIS absorbance spectrum. The difference in intensity is most likely due to unequal charge transfer during the deposition.

### Preparation of Solids

For example, amorphous MoS₂ solids can be made by by a modification of the method already described by Poulomi Roy, Suneel Kumar Srivastava in Thin Solid Films, 496 (2006) 293-298. 20 mL of a 4 mM aqueous solution of (NH₄)₂MoS₄ and 1 mL of hydrazine hydrate (64% N₂H₄ in water) was mixed and heated at 80-90°C. MoS2 solids formed from this reaction. The solids can be put onto a substrate such as FTO and show catalytic activity for hydrogen evolution reaction.

## Claims

1. Electrocatalyst for the reduction of proton to form H₂ consisting of amorphous transition metal sulphide films or solids having activity at all pH values.

2. The electrocatalyst of claim 1, wherein the transition metal sulphide is MoS₂ or WS₂.

3. The electrocatalyst of claims 1-2, wherein the amorphous transition metal sulphide films or solids are further doped with at least one metal selected from the group comprising Mn, Fe, Ni, Co, Cu, Zn, Sc, Ti, V, Cr, and Y.

4. Use of amorphous transition metal sulphide films or solids as an electrocatalyst for the reduction of proton to form H₂ at all pH values.

5. The use of amorphous transition metal sulphide films or solids of claim 4, wherein the transition metal sulphide is MoS₂ or WS₂.

6. The use of amorphous transition metal sulphide films of claims 4-5, wherein amorphous transition metal sulphide films or solids are further doped with at least one metal selected from the group comprising Mn, Fe, Ni, Co, Cu, Zn, Sc, Ti, V, Cr, and Y.

7. Use of the electrocatalyst of claims 1-3, for producing hydrogen gas from water or aqueous solutions.

8. Electrode for use in production of hydrogen gas from water or aqueous solutions comprising the electrode substrate, wherein the electrocatalyst of claims 1-3 is deposited on said electrode substrate.

9. The electrode for use in production of hydrogen gas from water or aqueous solutions of claim 8, wherein the electrode substrate is any conducting or semi-conducting substrate, selected from the group comprising glassy carbon disc, reticulated vitreous carbon foam, FTO coated glass, indium tin oxide, carbon fiber, carbon nanotube, carbon clothes, graphene, Si, Cu2O, TiO2, titanium metal, and boron-doped diamond.

10. Electrolysers for the hydrolysis of water or aqueous solutions comprising the electrode of claims 8 - 9.
